# EUROPÄISCHE PATENTSCHRIFT

(11) **EP 2 306 790 B1**
(45) Veröffentlichungstag und Bekanntmachung des Hinweises auf die Patenterteilung: **28.01.2015**
(21) Anmeldenummer: 09012576.6
(22) Anmeldetag: 05.10.2009
(51) Int. Cl.: H05B 41/00, H05B 41/282, H05B 41/02

(54) **Dimmbares und statisches elektronisches Vorschaltgerät auf einer universellen Leiterplatte**
Dimmable and static ballast on a universal PCB
Ballast à intensité reglable et non monté sur un circuit imprimé universel

(43) Veröffentlichungstag der Anmeldung: 06.04.2011
(73) Patentinhaber: BAG engineering GmbH, 59759 Arnsberg (DE)
(72) Erfinder: Honerkamp, Stefan, 49152 Bad Essen (DE); Meyer, Otto, 32351 Stemwede (DE)
(74) Vertreter: Lippert, Stachow & Partner

(56) Entgegenhaltungen:
- EP-A1- 0 422 594
- EP-A2- 0 957 519
- EP-A2- 1 850 643
- US-A- 6 107 755
- US-A1- 2006 158 131
- ALTERA: 'AN557: Stratix III-to-Stratix IV Cross-Family Migration Guidelines' 30 September 2009,

## Beschreibung

Die vorliegende Erfindung betrifft ein Verfahren zur Herstellung eines elektronischen Vorschaltgeräts zur Erzeugung einer Dauerbetriebsleistung für eine Entladungslampe, wobei eine, ein Layout aufweisende Leiterplatte mit wenigstens einem zentralen IC und einer Drossel bestückt wird.

Ein solches elektronische Vorschaltgerät kann als dimmbares oder nicht dimmbares -also statisches- elektronisches Vorschaltgerät ausgebildet sein. Bei einer identischen Gehäusegröße wird das dimmbare Vorschaltgerät aufgrund des höheren technischen Aufwands auf beispielsweise doppelseitig kupferkaschierten oder mehrlagigen und dementsprechend teureren Leiterplatte realisiert. Obwohl es prinzipiell möglich ist, dimmbare Geräte auch in einer statischen Version zu vertreiben, sprechen wirtschaftliche Gründe dagegen. Ein auf statischen Betrieb ausgelegtes elektronisches Vorschaltgerät ist in der Regel deutlich günstiger als ein für die gleiche Last auf dimmbaren Betrieb optimiertes Gerät, welches höhere Anforderungen beispielsweise hinsichtlich der Temperaturstabilität und der Fertigungstoleranzen an die verwendeten Bauteile stellt. Durch alleiniges Weglassen von Funktionsblöcken für den Dimmbetrieb, z.B. der Dimmschnitkstelle, kann das Kostenniveau eines vergleichbaren statischen Geräts nicht erreicht werden.

Die Offenlegungsschrift US 2006/0158131 A1 betrifft die Gestaltung eines elektronischen Vorschaltgerätes, das zum Treiben einer Entladungslampe ausgebildet ist, wobei zur Erhöhung der Packungsdichte ein integrierter Steuerschaltkreis, ein Gleichrichter, eine Gleichstromversorgung, eine Lastschaltung sowie Schaltungselemente auf einer einzelnen Leiterplatte angeordnet sind.

Es ist Aufgabe der vorliegenden Erfindung, ein Verfahren zur Herstellung eines elektronisches Vorschaltgerät nach dem Oberbegriff des Anspruchs 1 dahingehend zu entwickeln, dass sowohl der Aufbau eines dimmbaren als auch eines statischen Vorschaltgeräts sowie zugehöriger Beleuchtungsgeräte kostengünstiger und insbesondere in kompakteren Bauformen realisierbar wird.

Erfindungsgemäß ist vorgesehen, eine als Universalplattform verwendbare Leiterplatte, die ein zur Ausbildung eines dimmbaren und eines statischen Vorschaltgeräts verwendbares Layout aufweist, für das elektronische Vorschaltgerät zu verwenden.

Durch eine alternative Bestückung einer dasselbe Layout aufweisenden Leiterplatte kann sowohl ein dimmbares als auch ein statisches Gerät ausgebildet werden. Vorteile eines solchen übergreifenden Plattformansatzes sind geringere Kompfexitätskosten in der Logistik, da die Anzahl von verschiedenen Leiterplatten für statische und dimmbare Geräte erheblich reduziert wird. Bei gleichzeitig steigendem Einkaufsvolumen für die Universalplattform, die sowohl für statische als auch für dimmbare Geräte verwendet wird, wird ein erheblicher Einkaufsvorteil und somit eine deutliche Kostenreduzierung des entstehenden elektronischen Vorschaltgeräts und entsprechend auch eines mit einem solchen elektronischen Vorschaltgerät ausgestalteten Beleuchtungsgeräts erzielt.

Ferner wird bei dem erfindungsgemäßen Verfahren das Layout der Leiterplatte für elnen einlampigen und einen zumindest zweilampigen Betrieb ausgelegt. Die zwei, drei oder auch mehr Lampen sind vorzugsweise seriell geschaltet, wofür die Leiterplatte entsprechende Kontaktbereiche aufweist. So kann das erfindungsgemäße EVG beispielsweise eine 42-Watt-, eine 26 Watt- oder zwei 26 Watt-Lampen statisch oder dynamisch bestimmungsgemäß betreiben.

Darüber hinaus sieht das erfindungsgemäße Verfahren vor, dass das Layout dergestalt ausgebildet wird, dass sich in mindestens einem Anschlusspin unterscheidende und/oder unterschiedliche Beschaltung erfordernde ICs zur Bestückung der Leiterplatte verwendbar sind. Die Unterscheidung der einzelnen Anschlusspins kann hierbei über deren Anzahl oder auch deren Funktionalität erfolgen.

Ein als statisches Vorschaltgerät ausgebildetes elektronisches Vorschaltgerät (EVG) weist eine Leiterplatte auf, auf der neben einem Netzeingang und einem EMV-Filter ein zentraler IC angeordnet ist. Der IC ist bevorzugt als Halbbrücken- oder Vollbrückentreiber verwendbar. Des Weiteren ist auf der Leiterplatte eine Lampendrossel angeordnet. Das Layout der Leiterplatte des elektronischen Vorschaltgeräts weist hierbei die zur Ausbildung eines dimmbaren und eines statischen Vorschaltgeräts notwendigen Kontaktbereiche auf, die beispielsweise für den Fall eines einfachen statischen EVGs teilweise nicht benutzt werden.

Unter Kontaktbereich wird ein durch die für die Bestückung der verschiedenen Funktionselemente notwendigen Kontaktstellen auf der Leiterplatte definierbarer Bereich verstanden. Beispielsweise stellen die für einen Acht-Pin-IC notwendigen acht Kontaktstellen auf der Leiterplatte den Kontaktbereich für dieses Bauteil dar. Wesentliches Merkmal der Erfindung ist demnach, dass unabhängig davon, ob die Kontaktbereiche vollständig im aufgebauten EVG genutzt werden, diese im Layout vorgesehen sind. Bevorzugt werden zumindest teilweise dieselben Kontaktbereiche (zweier verschiedener EVGs) sowohl in einer Ausbildung als statisches als auch in einer Ausbildung als dimmbares Vorschaltgerät verwendet, wodurch sich Platzerspamisse für das Layout ergeben und das gesamte EVG kleiner dimensioniert werden kann. Dasselbe Layout der Leiterplatte findet in dimmbaren und nicht dimmbaren EVGs Anwendung.

Die Aufgabe wird des Weiteren gelöst durch ein Verfahren zur Herstellung eines Vorschaltgerät, bei dem das Platinenfayout so ausgeführt wird, dass durch Verbinden gemeinsam genutzter Anschlüsse und/oder der Verwendung etwaiger Bauteile zum Überbrücken von Leiterbahnen die Verwendung von ICs ermöglicht wird, die sich in zumindest einem Anschlusspin oder Pin voneinander unterscheiden und/oder eine unterschiedliche Besthaltung erfordem. Hierdurch lassen sich ICs derselben oder auch verschiedener Hersteller in einem EVG verwenden, was zumindest im Bereich elektronischer Vorschaltgeräte große Vorteile mit sich bringt. Durch die alternative Bestückung der anzuschließenden Bauteile sowie weiterer Funktionsteile, vorzugsweise unter Verwendung einer Schnittstelle für eine Regelung eines dimmbaren EVGs und unter Verwendung einer Vorheizung für den Dimmbetrieb kann so eine kostengünstige Dimmversion eines statischen Basisgeräts realisiert werden.

Vorzugsweise wird bei der Herstellung des elektronischen Vorschaltgeräts eine einseitig kupferkaschierte Leiterplatte verwendet, was im Vergleich zu doppelseitig kupferkaschierten Leiterplatten weitere Kostenerspamisse mit sich bringt. Bevorzugt wird eine dimmbare Variante eines EVGs hierbei mit einem hochintegrierten Brückentreiber-IC aufgebaut, welcher bereits einige Funktionen von ansonsten diskret vorzusehenden Bauteilen aufweist. Insbesondere ist ein solcher IC mit einer PFC-Ansteuerung, noch bevorzugter mit einer Sättigungsregelung für die Drossel und/oder einer End-of-lifeErkennung versehen.

In einer vorteilhaften Ausbildung der Erfindung weist das Platinen- oder Leiterplattenlayout Anschluss- oder Kontakbereiche auf, die für einen hochintegrierten und einen kostengünstigeren IC vorgesehen sind, wobei sich diese Kontaktbereiche zumindest teilweise Kontaktstellen teilen. Die für den zentralen IC vorgesehenen Anschlüse ermöglichen dann in ihrer jeweiligen Ausbildung auf der gleichen Leiterplatten-Basis den Betrieb eines dimmbaren und eines statischen Geräts, welches einen kostengünstigeren und nicht so hoch integrierten IC mit weniger Funktionen benötigt.

Besonders vorteilhaft im Hinblick auf den zur Verfügung stehenden Bauraum ist eine Ausbildung der Leiterplatte für das EVG, wobei auf der Leiterplatte der Kontaktbereich eines kleineren (zentralen) ICs in den Kontaktbereich eines größeren (zentralen) ICs integriert ist.

Beispielsweise ist der preiswerte 1C2 IR2520 in einem statischen Gerät verwendbar. Ein vergleichbares Gerät mit oder ohne zusätzlicher Dimmfunktion kann auf derselben Platine mit einem IC4 ICB1 FL02G (Infineon) realisiert werden. Die in dem Layout der gleichen Platine vorgesehenen Kontaktbereiche für diese ICs teilen sich eine Reihe von Anschlüssen. Das Layout kann hierbei wie nachfolgend beschrieben ineinander geschachtelte Anordnungsmöglichkeiten dieser ICs vorsehen. Vorstellbar ist jedoch ebenfalls, dass die ICs je nach zur Verfügung stehendem Platz auf der Platine nebeneinander angeordnet sein können.

Je nach Ausbildung der Erfindung weist die Leiterplatte Kontaktbereiche für eine Regelkreisversorgung, vorteilhafterweise realisiert über eine Hilfswicklung über die PFC-Drossel oder über den Vorheizübertrager, auf. Des Weiteren ist vorgesehen, einen Kontaktbereich für eine Schnittstelle zur Ansteuerung der Regelung für die Dimmung vorzusehen. Diese Regelung ist entweder als diskrete Funktionsgruppe oder auch über den IC integrierbar. Die beispielsweise für ein statisches Gerät nicht verwendeten Kontaktbereiche können vorzugsweise einfach überbrückt oder nicht bestückt sein.

Verwendbare ICs für dimmbare Geräte weisen beispielsweise achtzehn oder neunzehn Pins auf, die dann je nach Ausbildung unterschiedlich beschaltet werden können. Hierfür kann es gegebenenfalls auch vorgesehen sein, die einzelnen Kontaktstellen für die Pins über eine eigene Schaltung programmierbar und somit an verschiedene ICs anpassbar zu gestalten, um eine intelligente Leiterplatte zur Verfügung zu stellen. Eine solche Lösung ist jedoch relativ aufwendig.

Die für eine alternative Bestückung vorgesehenen Kontaktstellen der Leiterplatte sind zumindest teilweise miteinander verbunden, um identische Funktionen an gegebenenfalls unterschiedlichen Pins gemeinsam nutzen zu können, wodurch auf annähernd demselben Bauraum und mit Leiterplatte identischen Layouts dimmbare und statische EVGs aufbaubar sind.

Vorteilhafterweise weist das elektronische Vorschaltgerät eine Sättigungsregelung für die Drossel auf, die besonders bevorzugt nicht als diskrete Bauteile auf dem EVG sondern als Funktion des ICs durch diesen ausgebildet wird. Es können so kleinere Drosseln verwendet werden, um für optionale, weitere Funktionsgruppen auf der Leiterplatte Platz zu schaffen. Vorzugsweise können auch zusätzliche Vorheizmaßnahmen für eine dimmbare Variante der Universalplattform auf der Leiterplatte angeordnet werden.

In einer weiteren vorteilhaften Ausgestaltung der Erfindung umfasst das elektronische Vorschaltgerät einen Logarithmierverstärker als Teil einer Lampenstromauswertung. Dieser gewährleistet bei einem Vorschaltgerät mit Dimmmöglichkeit einen stabilen Betrieb auch bei niedrigen Dimmpegeln von beispielsweise 1 % -50 %. Der Vergleich des typischerweise von einem Schnittstellenblock bereitgestellten Sollpegels mit dem vorzugsweise durch Gleichrichtung aufbereiteten Istwert des Lampenstroms aus der Lampenstromauswertung führt zu einem Ausgangssignal der Regelungsschaltung, welches beispielsweise auf den frequenzbestimmenden Eingang des ICs weitergeführt wird. Aufgrund der Verwendung eines Logarithmierverstärkers kann auf die herkömmlicherweise verwendeten Leistungsdioden zur Gleichrichtung des Lampenstromsignals verzichtet werden.

Bevorzugt bei einer Ausbildung als insbesondere dimmbar gestaltetes Vorschaltgerät weist dieses für die Lampenstromauswertung und die Stromregelung einen Zweifach-Operationsverstärker auf. Eine Schaltung mit einem Operationsverstärker mit einer vorzugsweise geringen Leistungsaufnahme, um keine zusätzliche Spannungsversorgung aufwenden zu müssen, ist in der Figurenbeschreibung näher erläutert. Die dargestellte Schaltung dient insbesondere der Vermeidung von hohen Temperatureinflüssen bei hohen Lampenströmen.

In einer weiteren vorteilhaften Ausgestaltung der Erfindung weist das elektronische Vorschaltgerät eine Kompensationsschaltung zur Kompensation von Leitungskapazitäten auf. Diese Schaltung ist insbesondere für die Ausbildung des dimmbaren Vorschaltgeräts vorteilhaft. Es hat sich gezeigt, dass ohne diese Kompensationsschaltung durch parallel zur Lampe liegende Kabelkapazitäten insbesondere bei niedrigen Dimmpegeln ein Teil des Stroms aus dem EVG nicht durch die Lampe fließt, so dass diese im ungünstigsten Fall erlischt. Die Kompensationsschaltung ist zur Auswertung der Phasenverschiebung zwischen Lampenspannung und der Spannung am Lampenstrom-Shunt bei zusätzlich zur Lampenlast auftretenden Leitungskapazitäten ausgebildet.

Besonders vorteilhaft ist hierbei eine Beschaltung, die so ausgebildet ist, dass zusätzlich zur Halbwelle der Lampenshuntspannung einer bestimmten Polarität auch der zu der Lampenspannung gleicher Polarität noch korrespondierende Teil der Lampenshuntspannung anderer Polarität abgeschnitten wird. Hierdurch kann das Ausgangssignal eines nicht invertierend beschalteten Logarithmierverstärkers kleiner werden, so dass über eine Soll-/lstwerterkennung eine Frequenzanpassung erfolgen kann. Die Kompensationsschaltung ist hierfür zwischen Logarithmierverstärker und Lampe angeordnet und weist eine kostengünstige Diode, einfache Widerstände und einen Kondensator auf. Auf teure und/oder platzaufwendige Bauteile für komplexe Kompensationsschaltungen kann verzichtet werden. Für ein statisches elektronisches Vorschaltgerät können die entsprechenden Kontaktstellen auf einfache Art und Weise überbrückt oder nicht bestückt werden. Gleiches gilt auch für etwaige andere Kontaktstellen oder -bereiche, die für das statische Vorschaltgerät nicht benötigt werden. Es ist somit vorteilhaft, Überbrückungselemente vorzusehen, die auf die entsprechende Leiterplatte abgestimmt sind.

Diese Leitungskapazitätskompensation lässt sich auch in Verbindung mit auf Leistungsdioden basierenden Auswertungsschaltungen verwirklichen, die ohne die als Universalplattfarm verwendbare Leiterplatte bei im Stand der Technik bekannten Vorschaltgeräten Anwendung finden. Es ist daher möglich auf andere aufwendige Auswertungsschaltungen zu verzichten.

Zur Ausbildung einer Schutzabschaltung ist der verwendbare IC sowohl für ein statisches als auch ein dimmbares EVG mit zumindest einer Abschaltschwelle an einem Stromfühlungseingang versehen. Etwaige Beschädigungen des elektronischen Vorschaltgeräts, bzw. des Betriebsgeräts und dessen Umgebung werden hierdurch wirksam vermieden. Das entsprechende Prinzip basiert auf der Detektion von zum Ende der Lebensdauer einer Lampe hin ansteigenden Gleichspannungsanteilen, wobei das EVG vorzugsweise eine mit dem Stromfühlungseingang des Brückentreiber-ICs geschaltete Z-Diode aufweist, welche bei einem ausreichenden und über eine Widerstand-Kondensator-Schaltung ermittelbaren Gleichspannungsanteil durchgeschaltet wird, wodurch dann das Stromsignal über die Abschaltschwelle des ICs geschoben wird. Besonders vorteilhaft ist ein IC mit einer oberen und einer unteren Abschaltschwelle, wofür zwei Z-Dioden für einen positiven und einen negativen Gleichrichtereffekt auf der Leiterplatte angeordnet sind. Eine solche "End-of-life"- Schaltung erhöht die Betriebssicherheit des elektronischen Vorschaltgeräts erheblich.

Ein elektronisches Vorschaltgerät ist besonders vorteilhaft mit einem IC und einer Vorheizeinrichtung gekennzeichnet, die zum dimmbaren Betrieb zumindest zweier seriell angeordneter Lampen ausgelegt sind.

Die eingangs gestellte Aufgabe wird ebenfalls gelöst durch ein Beleuchtungsgerät, welches ein elektronisches Vorschaltgerät umfasst, das in einer vorbeschriebenen Ausbildung hergestellt ist. Auch Kombinationen der vorbeschriebenen technischen Merkmale der Ausführungsbeispiele der Erfindung sind möglich und in einem entsprechenden Betriebsgerät realisierbar.

Weitere Vorteile und Einzelheiten der Erfindung lassen sich der nachfolgenden Figurenbeschreibung entnehmen. In den schematischen Darstellungen zeigt.
- Fig. 1: ein Blockschaltbild eines universell bestückbaren EVGs mit Lampe,
- Fig. 2: eine Layoutgestaltung für eine alternative IC-Bestückung,
- Fig. 3: eine teilweise dargestellte Schaltung eines erfindungsgemäßen Beleuchtungsgeräts mit einem Logarithmierverstärker und einer Kompensationsschaltung für Leitungskapazitäten,
- Fig, 4a: ein Diagramm von Shuntstrom/Lampenspannung und Logarithmierausgangsspannung ohne Lastkapazität,
- Fig. 4b: die Abbildung nach Fig. 4a mit Lastkapazität,
- Fig. 5: ein Blockschaltbild einer Abschalteinrichtung,

Die nachfolgend beschriebenen technischen Merkmale können sowohl einzeln als auch in der Kombination mehrerer Merkmale die vorbeschriebenen Ausführungsbeispiele der Erfindung vorteilhaft weiterbilden. Identisch oder ähnlich wirkende Teile sind - sofern dienlich - mit identischen Bezugszeichen versehen.

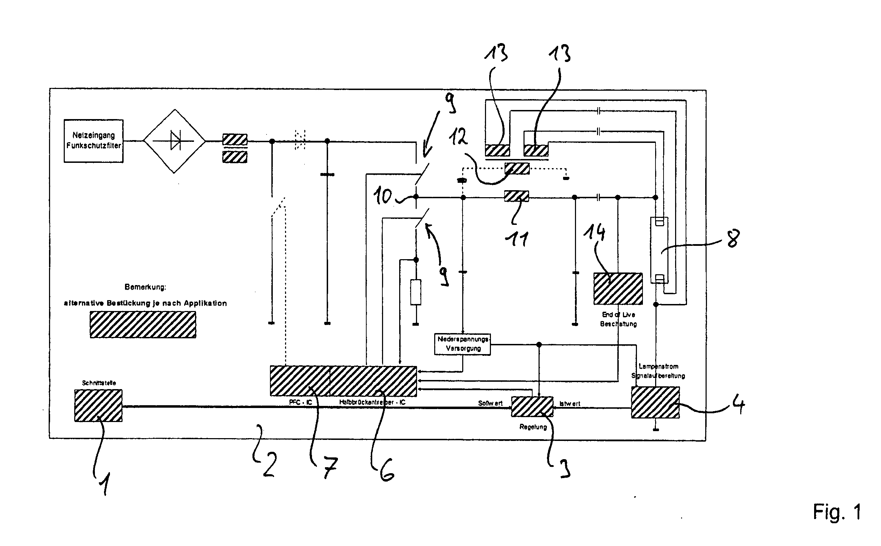

Das Blockschaltbild nach Fig. 1 zeigt zu rein illustrativen Zwecken alternativ bestückbare Kontaktbereiche von diskreten, auf der Leiterplatte eines elektronischen Vorschaltgeräts anzuordnenden Funktionskreisen für die Ausbildung eines EVGs mit oder ohne Dimmmöglichkeit. In der dargestellten Version ist das Vorschaltgerät dimmbar ausgebildet, wobei jedoch für die Ausbildung eines statischen Geräts (unter Ersatz eines hochintegrierten ICs) beispielsweise eine Schnittstelle 1 auf der Leiterplatte 2 weggelassen werden könnte, so dass nur der Kontaktbereich für die Schnittstelle 1 übrig bleiben würde.

Die Schnittstelle 1 ist mit einer Regelung 3 verbunden, die ebenfalls optional ausgebildet ist und über die der von der Schnittstelle bzw. dem Bedienenden vorgegebene Sollwert für die Dimmung mit dem von einer Signalaufbereitung bzw. Lampenstrommessung 4 vorgegebenen Ist-Wert verglichen und ein entsprechendes Signal an einen zentralen IC 6 weitergegeben wird. Der IC 6 ist in diesem Fall als Treiber für die dargestellte Halbbrücke ausgebildet. Er kann jedoch beispielsweise auch als Vollbrückentreiber zum Betrieb einer anders aufgebauten Schaltung verwendet werden. Für den Betrieb der Leistungsfaktorkorrekturschaltung (PFC) ist ein weiterer IC 7 vorgesehen, der wie dargestellt jedoch von seiner Funktionalität her auch in den Halbbrückentreiber-IC 6 integriert sein kann.

Für die Bereitstellung einer Dauerbetriebsleistung einer ebenfalls eingezeichneten Lampe 8 wird über Transistoren 9 ein Mittenabgriff 10 hin- und hergeschaltet. Eine notwendige Lampendrossel 11, die je nach Dimensionierung des EVGs unterschiedlich ausgebildet ist, dient der Begrenzung des über die Lampe 8 fließenden Stroms. Für die Erzeugung der für die (Vor-)Heizung der Kathoden notwendige Energie werden Hilfswicklungen 13 verwendet. Diese sind als Sekundärwicklungen, wie der Fig. 1 zu entnehmen ist, entweder an der Drossel 11 oder an einem alternativ vorzusehenden Vorheizübertrager 12 angeordnet.

Als zusätzliches Funktionsteil, welches durch Vorsehen entsprechender Kontaktbereiche auf der Leiterplatte anbringbar ist, ist eine "End-of-life"-Schaltung 14 vorgesehen. Diese kann beispielsweise auch über den IC 6 realisiert bzw. in diesen integriert sein.

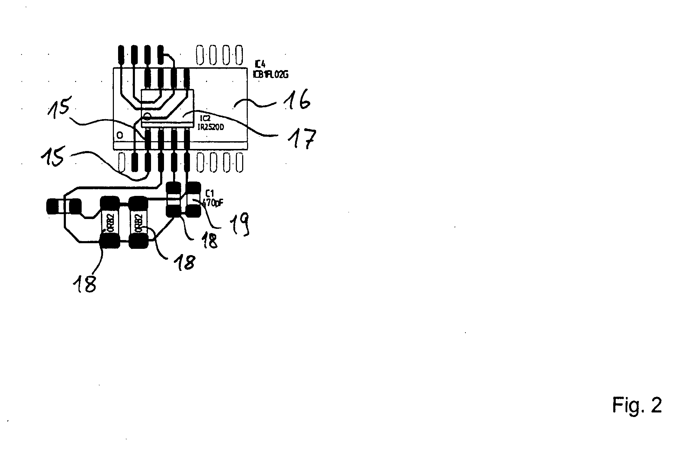

Die in der Abbildung schraffierten Funktionsteile sind alternativ zur Ausbildung anderer Vorschaltgeräte bzw. entsprechender Beleuchtungsgeräte ersetzbar. Hierfür sind die jeweiligen Kontaktbereiche auf der Leiterplatte bereits vorgesehen. Dies gilt insbesondere hinsichtlich der Bestückung der Leiterplatte 2 mit unterschiedlichen ICs, wie sie in der Fig. 2 angedeutet ist. Das dort gezeigte Platinenlayout für den Bereich des ICs ist dergestalt ausgeführt, dass gemeinsam genutzte Anschlüsse oder Kontaktstellen 15 miteinander verbunden sind und der einfacher aufgebaute und nicht entsprechend eine solche Vielzahl an Funktionen aufweisende kleinere Chip 17 innerhalb eines Kontaktbereichs eines hochintegrierteren Chips 16 angeordnet ist. Die ICs, hier beispielsweise ein vergleichsweise hochintegrierter IC 4 lCB1FL02G und ein IC2 IR2520D unterscheidet sich nicht nur durch die Anzahl der Pins, sondern auch durch die über diese Pins ausführbaren Funktionen, Während der kleinere Chip 17 insbesondere für preiswerte statische Geräte verwendet wird, eignet sich der größere Chip 16 für ein EVG, welches auch statisch ausgebildet ist oder eine zusätzliche Dimmfunktion besitzt. Ein solcher Chip oder IC 16, der bereits zur Leistungsfaktorkorrektur ausgelegt sein kann, sowie weiterhin über eine Vorheizregelung für die Kathoden und eine Regelung des Lampenstroms verfügen kann, wird mithin auf derselben Plattform wie ein nicht dimmbares Gerät realisiert.

Besonders vorteilhaft ist die ineinander geschachtelte Anordnung der Kontaktbereiche, wobei gemeinsam genutzte Anschlüsse 15 miteinander verbunden sind und ggf. über Widerstände 18 und Kondensatoren 19 miteinander verschaltet sind.

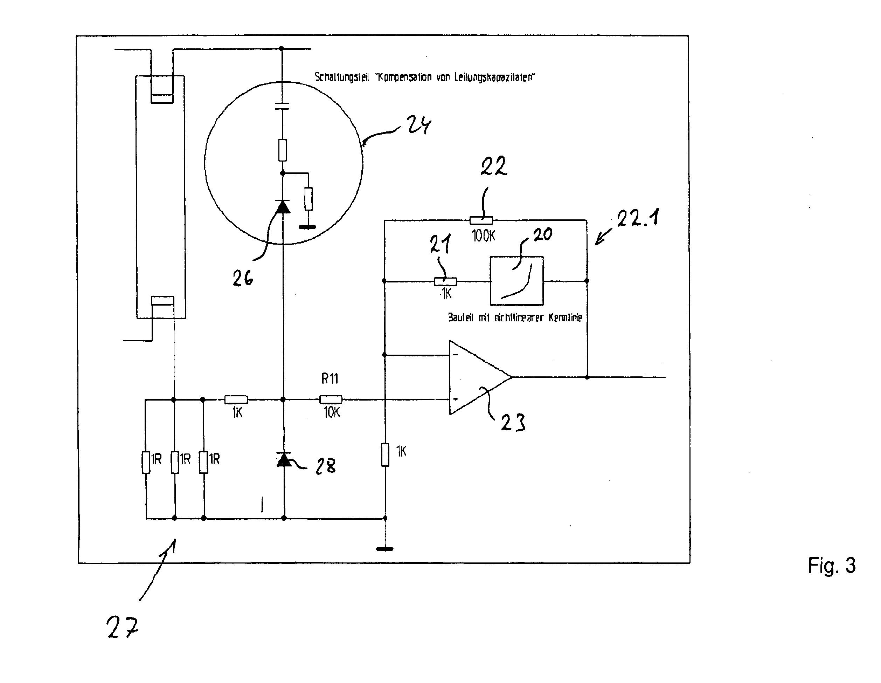

Bei einer Ausbildung eines dimmbaren EVGs ist es vorteilhaft, eine einfache und trotzdem genaue Regelung des Lampenstroms vorzusehen. Hierbei weist die Signalauswertung eine in Fig. 3 offenbarte Schaltung auf, bei der im Gegensatz zum Stand der Technik keine Leistungsdioden für eine Gleichrichtung des Lampenstromsignals benötigt werden. Bei hohen Lampenströmen bewirkt der Rückkopplungszweig 22.1 über die Kombination eines niederohmigen Widerstands 21 und eines eine logarithmische bzw. zumindest nichtlineare Kennlinie aufweisenden Funktionskreises 20 eine geringe Verstärkung. Bei niedrigen Lampenströmen ist dieser Zweig 22.1 jedoch sehr hochohmig, so dass in erster Linie der parallel angeschlossene hochohmige Widerstand 22 die dann wesentlich höhere Verstärkung durch den Operationsverstärker 23 bestimmt.

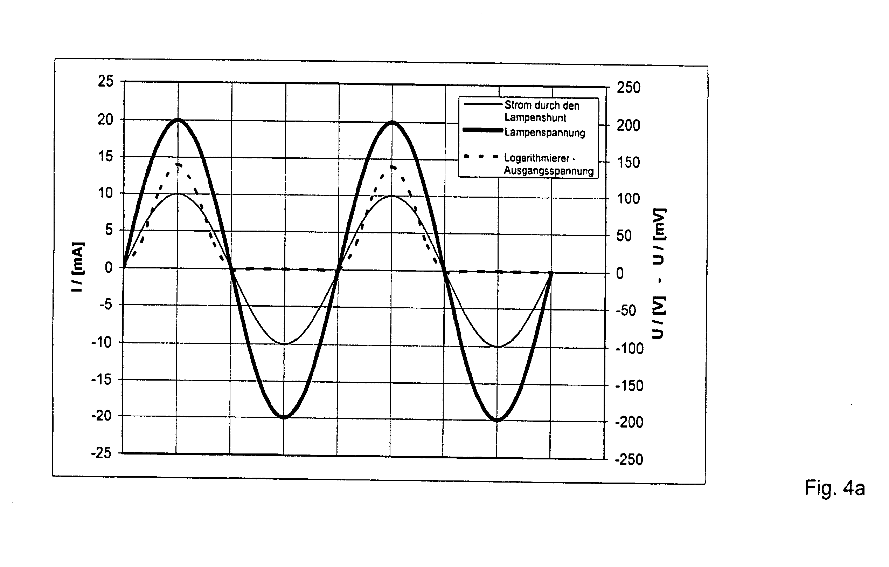

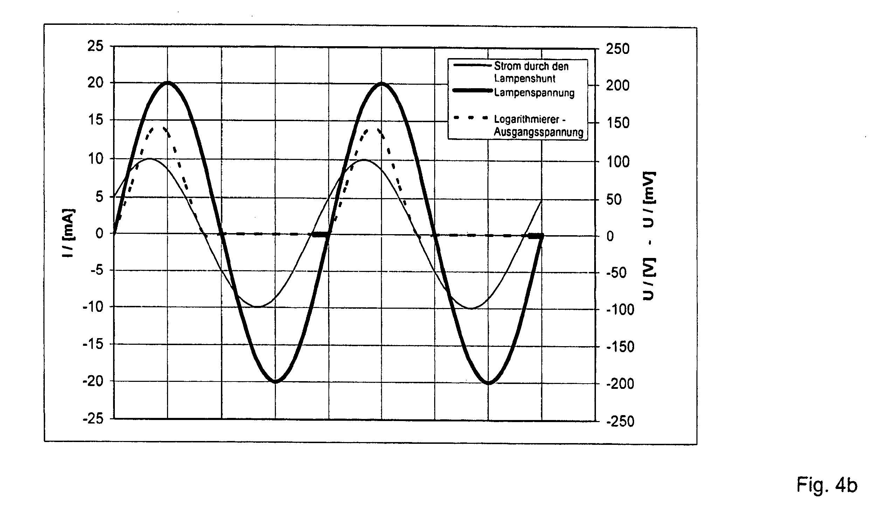

Ebenfalls in der Fig. 3 ist eine neue Schaltung bzw. entsprechend ein neues Verfahrens zur Kompensation von Leitungskapazitäten offenbart. Die allgemein in einem kreisförmigen Ausschnitt 24 kenntlich gemachte Schaltung umfasst eine Diode 26, über die der Verstärkereingang des Verstärkers 23 mit einem heruntergeteilten Lampenspannungssignal beschaltet wird. Die Wirkungsweise des Kompensationsverfahren für Leitungskapazitäten ist insbesondere den Fig. 4a und 4b zu entnehmen. In der Fig. 4a sind die Kurven für den Strom durch einen Lampenshunt 27, für die Lampenspannung und die Ausgangsspannung des Logarithmierverstärkers in Phase. Bei einer durch Leitungskapazitäten verursachten Phasendifferenz zwischen dem Strom durch den Lampenshunt 27 und der Lampenspannung begrenzt die über die Diodenstrecke eingekoppelte negative Halbwelle der Lampenspannung das Eingangssignal für den Logarithmieroperationsverstärker auf die negative Flussspannung der unteren Diode 28. Da der Logarithmierverstärker nur mit einer positiven Versorgungsspannung aufgebaut ist und nicht invertierend geschaltet ist, findet für den Zeitraum der negativen Halbwelle der Lampenspannung keine Verstärkung statt. Bei einer Phasenverschiebung wird zusätzlich zur negativen Halbwelle der Lampenshuntspannung, die nicht verstärkt wird, auch für den Zeitraum, in dem die Lampenspannung noch negativ ist, der positive Teil der Lampenshuntspannung abgeschnitten. Die Ausgangsspannung des Logarithmierverstärkers verbleibt somit durch die Verwendung der Dioden 26 und 28 aufweisenden Diodenstrecken für den in der Fig. 4b fettgedruckten Bereich zusätzlich auf der Null-Achse bzw. X-Achse. Das Eingangssignal des Logarithmierverstärkers und damit auch sein Ausgangssignal werden kleiner. Ein nachgeschalteter Regler der Regelung 3 stellt somit bei dem Vergleich mit dem eingestellten Sollwert eine Abweichung fest und wirkt dieser durch eine Frequenzanpassung des Oszillators bzw. des ICs entgegen.

Die in der Fig. 3 dargestellte Kompensationsschaltung kann vorteilhafterweise mit einem parallel zum an Masse angeschlossenen Widerstand bestückten Kondensator versehen sein. Dieser Filter dient der Verbesserung des Signals der Leitungskompensationsschaltung.

Diese Art der Leitungskapazitätskompensation funktioniert auch in Kombination mit der Signalaufbereitung des Lampenstroms nach dem Stand der Technik, bei der zumindest mit zwei Leistungsdioden und entsprechenden Widerständen versehene, vergleichsweise teure Aufbereitungsschaltungen verwendet werden. Als weitere Lösung der Aufgabe ist eine als Universalplattform verwendbare Leiterplatte geeignet, die in entsprechenden dimmbaren und nicht statischen Geräten verwendbar ist und wie vor- und nachstehend beschrieben ausgebildet ist.

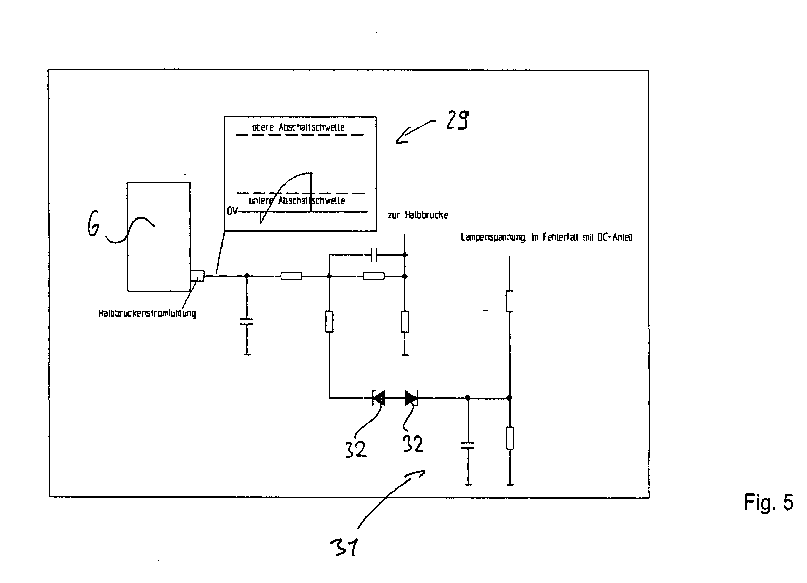

Die in der Fig. 5 offenbarte Schutzabschaltung bzw. End-of-Life-Schaltung wird erfindungsgemäß mit zwei in den IC 6 integrierten Abschaltschwellen, die in dem mit 29 bezifferten Diagramm angedeutet sind, realisiert. Über eine Widerstands-Kondensator-Kombination 31 wird der Gleichanteil der Lampenspannung ermittelt. Sobald dieser Wert ausreicht, eine der beiden Z-Dioden 32 für den negativen und positiven Gleichrichtereffekt zu schalten, wird das Halbbrückensignal je nach Fehlerfall entweder über die obere oder die untere Abschaltschwelle des Stromfühlereingangs des ICs 6 geschoben, so dass die Schutzabschaltung aktiviert wird. Vorteilhaft ist in dieser Schaltung neben dem geringen Bauteilaufwand, dass im Fehlerfall hauptsächlich die Toleranzen der Z-Dioden 32 für die Aktivierung der Schutzabschaltung relevant sind. Die Schaltung bietet sich auch für insbesondere als Halbbrückentreiber ausgebildete Brückentreiber-ICs an, deren integrierte Abschaltung aufgrund von Fertigungstoleranzen zu ungenau funktioniert.

## Patentansprüche

1. Verfahren zur Herstellung eines elektronischen Vorschaltgeräts, das zur Erzeugung einer Dauerbetriebsleistung für eine Entladungslampe (8) ausgebildet ist, wobei eine, ein Layout aufweisende Leiterplatte (2) mit wenigstens einem zentralen IC (6, 16, 17) und einer Drossel (11) bestückt und
die Leiterplatte (2) als Universalplattform verwendet wird, und das Layout der Leiterplatte (2) ferner für einen wahlweise einlampigen und einen zumindest zweilampigen Betrieb ausgelegt wird,
**dadurch gekennzeichnet, dass** die Leiterplatte (2) verwendet wird mit einem Layout zur Ausbildung eines dimmbaren und eines statischen Vorschaltgeräts, wobei das Layout der Leiterplatte (2) dergestalt gestaltet wird, dass, eine unterschiedliche Beschaltung erfordernde ICs (16, 17) verwendbar sind, die entweder spezifisch für ein dimmbares oder ein statisches Vorschaltgerät sind, und ein über die Anordnung von Kontaktstellen definierter Kontaktbereich eines ICs (17) teilweise innerhalb eines Kontaktbereiches eines anderen in dem Vorschaltgerät verwendbaren ICs (16) angeordnet wird.

2. Verfahren nach Anspruch 1, **dadurch gekennzeichnet, dass** die Leiterplatte (2) einseitig kupferkaschiert wird.

3. Verfahren nach Anspruch 1, **dadurch gekennzeichnet, dass** die für eine alternative Bestückung vorgesehenen Kontaktstellen (15) der Leiterplatte (2) teilweise miteinander verbunden werden.

4. Verfahren nach einem der vorherigen Ansprüche,
**dadurch gekennzeichnet, dass** eine Sättigungsregelung für die Drossel (11) verwendet wird.

5. Verfahren nach einem der vorherigen Ansprüche, **gekennzeichnet durch** eine einen Logarithmierverstärker aufweisende Lampenstromauswertung.

6. Verfahren nach Anspruch 5, **dadurch g**e**kennzeichnet, dass** das Vorschaltgerät dimmbar ausgebildet wird und für die Lampenstromauswertung und die Stromregelung zumindest zwei Operationsverstärker vorgesehen werden.

7. Verfahren nach einem der vorherigen Ansprüche,
**gekennzeichnet durch** das Vorsehen einer Kompensationsschaltung zur Kompensation von Leitungskapazitäten.

8. Verfahren nach Anspruch 6 und Anspruch 7, **dadurch gekenntzeichnet**, **dass** die Kompensationsschaltung dergestalt aufgebaut wird, dass insbesondere unter Verwendung einer Diodenstrecke bei einer Phasenverschiebung von Lampenspannung und Lampenshuntspannung zusätzlich zur Halbwelle der Lampenshuntspannung einer Polarität auch der zu der Lampenspannung gleicher Polarität korrespondierende Teil der Lampenshuntspannung anderer Polarität abgeschnitten wird.

9. Verfahren nach einem der vorherigen Ansprüche,
**dadurch gekennzeichnet, dass** ein zur Ausbildung einer Schutzabschaltung ausgebildetes und zumindest eine Abschaltschwelle an einem Stromfühlungseingang aufweisendes IC(16) vorgesehen wird.

10. Verfahren nach Anspruch 9, **dadurch gekennzeichnet, dass** eine Z-Diode (32) vorgesehen wird, die dergestalt mit dem Stromfühlungseingang verschaltet wird, dass bei einem ausreichenden und über eine Widerstands-Kondensator Schaltung ermittelbaren Gleichspannungsanteil das Stromsignal über die Abschaltschwelle geschoben wird.

11. Verfahren nach Anspruch 10, **dadurch gekenntzeichnet, dass** ein, eine obere und eine untere Abschaltschwelle aufweisendes IC und zwei Z-Dioden (32) für einen positiven und einen negativen Gleichrichtereffekt vorgesehen werden.

12. Verfahren nach einem der vorherigen Ansprüche,
**dadurch gekennzeichnet, dass** die Leiterplatte (2) mit einem IC (16) und einer Vorheizeinrichtung bestückt wird, die zum dimmbaren Betrieb zumindest zweier seriell angeordneter Lampen ausgelegt sind.

13. Elektronisches Vorschaltgerät,
das nach einem Verfahren gemäß einem der Ansprüche 1 bis 14 hergestellt ist.

14. Beleuchtungsgerät mit einer Entladungslampe, das ein elektronisches Vorschaltgerät nach Anspruch 13 aufweist.

## Claims

1. Process for producing an electronic ballast configured for generating a permanent operating power for a discharge lamp (8), wherein a printed circuit board (2) having a layout is equipped with at least one central IC (6, 16, 17) and a choke (11) and wherein the printed circuit board (2) is used as a universal platform and the layout of the printed circuit board (2) is further designed for a selective one- and at least two-lamp operation, **characterized in that** the printed circuit board (2) is used with a layout for configuring a dimmable and a static ballast, the layout of the printed circuit board (2) being designed in such a manner as to allow the use of ICs (16, 17) requiring a different wiring, said ICs being specific either to a dimmable or a static ballast, and that a contact section of an IC (17) defined through the arrangement of contact points is arranged partly within a contact section of a different IC (16) that can be used in said ballast.

2. Process according to claim 1, **characterized in that** the printed circuit board (2) is copper-clad on one side thereof.

3. Process according to claim 1, **characterized in that** contact points (15) of the printed circuit board (2) provided for an alternative placement of components are partly connected to each other.

4. Process according to any one of the preceding claims, **characterized in that** a saturation control is applied to the choke (11).

5. Process according to any one of the preceding claims, **characterized by** an evaluation of the lamp current comprising a logarithmic amplifier.

6. Process according to claim 5, **characterized in that** the ballast is configured in a manner so as to be dimmable and that at least two operational amplifiers are provided for the lamp current evaluation and the current control.

7. Process according to any one of the preceding claims, **characterized by** the provision of a compensating circuit for compensating line capacities.

8. Process according to claim 6 or claim 7, **characterized in that** the compensating circuit is constructed in such a manner that at a phase shift of the lamp voltage and the lamp shunt voltage there is cut-off additionally to the half-wave of the lamp shunt voltage of one polarity also the corresponding part of the lamp shunt voltage of a different polarity, particularly under the use of a diode path.

9. Process according to any one of the preceding claims, **characterized in that** there is provided an IC (16) adapted for configuring a safety cut-off and having at least one cut-off threshold at a current sensing input.

10. Process according to claim 9, **characterized in that** a Zener diode (32) is provided which is connected to the current sensing input in such a manner that at a direct current component which is sufficient and which can be detected via a resistor-capacitor circuit, the current signal is moved over the cut-off threshold.

11. Process according to claim 10, **characterized in that** there are provided an IC having un upper and a lower cut-off threshold and two Zener diodes (32) for a positive and a negative rectifying effect.

12. Process according to any one of the preceding claims, **characterized in that** the printed circuit board (2) is equipped with an IC (16) and a preheating device which are configured for a dimmable operation of at least two lamps arranged in series.

13. Electronic ballast manufactured using a process according to one of the claims 1 to 14.

14. Lighting device with a discharge lamp that comprises an electronic ballast according to claim 13.

## Revendications

1. Procédé pour la fabrication d'un ballast électronique configuré pour la génération d'une puissance de service continu pour une lampe à décharge (8), dans ledit procédé une plaquette à circuit imprimé (2) présentant un layout est garnie d'au moins un CI central (6, 16, 17) et d'un self (11) et la plaquette à circuit imprimé (2) est utilisée comme une plateforme universelle, et le layout de la plaquette à circuit imprimé (2) en outre est configuré pour une service aux choix d'une lampe ou d'au moins deux lampes,
**caractérisé en ce que** la plaquette à circuit imprimé (2) est utilisé avec un layout pour configurer un ballast à intensité réglable et un ballast statique, le layout de la plaquette à circuit imprimé (2) étant configuré de sorte qu'on peut utiliser des circuits intégrés (16, 17) requérant une constitution de circuits différente et étant spécifiques pour un ballast à intensité réglable ou un ballast statique, et qu'une plage de contact d'un CI (17) définie par la disposition des points de contact est arrangé en partie à l'intérieur d'une plage de contact d'un autre CI (16) qui peut être utilisé dans le ballast.

2. Procédé selon la revendication 1, **caractérisé en ce que** la plaquette à circuit imprimé (2) est cachée de cuivre d'un côté.

3. Procédé selon la revendication 1, **caractérisé en ce que** les points de contact (15) prévus pour un garnissage alternatif de la plaquette à circuit imprimé (2) sont partiellement reliés les uns aux autres.

4. Procédé selon l'une quelconque des revendications précédentes, caractérisé ce qu'on utilise une réglage de la saturation à la self (11).

5. Procédé selon l'une quelconque des revendications précédentes, **caractérisé par** une évaluation du courant de lampe comprenant un amplificateur logarithmique.

6. Procédé selon la revendication 5, **caractérisé en ce que** le ballast est configuré de manière réglable en intensité et qu'on prévoit au moins deux amplificateurs opérationnels pour l'évaluation du courant de lampe et pour la régulation d'intensité.

7. Procédé selon l'une quelconque des revendications précédentes, **caractérisé en ce qu'**on prévoit un circuit de compensation pour la compensation des capacités de ligne.

8. Procédé selon la revendication 6 et la revendication 7, **caractérisé en ce que** le circuit de compensation est configuré de sorte que lors d'une quadrature de la tension de lampe et de la tension du shunt de lampe, on coupe en plus de la demi-onde de la tension du shunt de lampe à une polarité aussi la partie correspondante de la tension du shunt de lampe à une polarité différente, en utilisant en particulier une voie de diode.

9. Procédé selon l'une des revendications précédentes, **caractérisé en ce qu'**on prévoit un CI (16) configuré pour fournir une coupure de protection et comprenant au moins un seuil de coupure sur une entrée de capteur de courant.

10. Procédé selon la revendication 9, **caractérisé en ce qu'**on prévoit une diode Zener (32) qui est connectée avec l'entrée de capteur de courant de sorte qu'en cas d'une composante continue suficiente et determinable via un circuit résistance-condensateur, le signal de courant est fait dépasser le seuil de coupure.

11. Procédé selon la revendication 10, **caractérisé en ce qu'**on prévoit un CI comportant un seuil de coupure supérieur et un seuil de coupure inférieur, et deux diodes Zener (32) pour un effet de redressement positif et négatif.

12. Procédé selon l'une quelconque des revendications précédentes, **caractérisé en ce que** la plaquette à circuit imprimé (2) est garnie d'un CI (16) et d'un dispositif de pré-chauffage configurés pour le service d'au moins deux lampes disposées en série de manière réglable en intensité.

13. Ballast électronique fabriqué selon l'une quelconque des revendications 1 à 14.

14. Dispositif luminaire avec une lampe à décharge, comprenant un ballast électronique selon la revendication 13.
